# EUROPÄISCHE PATENTSCHRIFT

(11) **EP 1 144 282 B1**
(45) Veröffentlichungstag und Bekanntmachung des Hinweises auf die Patenterteilung: **12.05.2004**
(21) Anmeldenummer: 99963306.8
(22) Anmeldetag: 17.11.1999
(51) Int. Cl.: B65G 1/06, B65G 13/07, B65G 47/54

(54) **KOMMISSIONIERLAGER FÜR STÜCKGÜTER**
PICKING STORE FOR PIECE GOODS
DISPOSITIF POUR RASSEMBLER ET PREPARER DES MARCHANDISES DE DETAIL

(43) Veröffentlichungstag der Anmeldung: 17.10.2001
(73) Patentinhaber: Dynamic Systems Engineering bv, 7005 BK Doetinchem (NL)
(72) Erfinder: HOLLANDER, Rudolf, NL-7251 KC Vorden (NL)
(74) Vertreter: Christophersen & Partner
(86) Internationale Anmeldenummer: PCT/EP1999/008823
(87) Internationale Veröffentlichungsnummer: WO 2001/036301

(56) Entgegenhaltungen:
- EP-A- 0 803 453
- CH-A- 432 366
- DE-U- 29 519 805
- US-A- 3 933 237
- US-A- 4 835 702
- US-A- 4 915 566
- US-A- 5 040 669

## Beschreibung

Die Erfindung betrifft ein Kommissionierlager für Stückgüter, bestehend aus
- einem Lagerbereich mit einer Vielzahl sich darin parallel zueinander erstreckender, aus Rollenbahnen bestehender Lagergassen für die zu kommissionierenden Waren, wobei sich in jeder Gasse hintereinander liegend Waren derselben Warenart befinden und jede Lagergasse mit einer eigenen, unabhängig von den übrigen Ennahmevorrichtungen betätigbaren Entnahmevorrichtung versehen ist,
- einem Bestückungsbereich am einen Ende der Lagergassen mit Mitteln zur Einlagerung neuer Waren in die dafür vorgesehenen Lagergassen und
- einem Kommissionierbereich am anderen Ende der Lagergassen mit Entnahmevorrichtungen zur rechnergesteuerten Überführung einzelner Waren aus den Lagergassen auf nachgeordnete Fördereinrichtungen.

Die Kommissionierlagertechnik gewinnt in allen Bereichen des Handels und insbesondere auch im Lebensmittelgroßhandel an Bedeutung. Jedoch büßt die Lagertechnik im engeren Sinne, d. h. die statische Lagerung der einzelnen Stückgüter, eher an Bedeutung ein, wohingegen die dynamischen Prozesse und in erster Linie das Umschlagen der Güter an Bedeutung gewinnen. Ziel einer modernen Lagertechnik ist es daher, die Verweildauer der einzelnen Stückgüter in dem Lager und damit die mit der Einlagerung verbundene Kapitalbindung so gering wie möglich zu halten.

Die bekannten Kommissionierlager sind als mehrstöckige Regalkonstruktionen mit nebeneinander und übereinander angeordneten Lagergassen für die Stückgüter ausgebildet. Die Böden der Lagergassen sind mit Rollenbahnen aus frei drehbaren Rollen versehen und leicht geneigt, so daß die an dem einen Ende der Lagergassen, der sogenannten Beschickungs- oder Bestückungsseite, eingelagerten Waren entlang der Rollenbahnen zum anderen Ende der Lagergasse, der Entnahme- bzw. Kommissionierseite, laufen. Die Einlagerung der Stückgüter auf der Beschickungsseite erfolgt in der Regel von Hand, indem die einzelnen Stückgüter von einer Palette entnommen und in die jeweils zugewiesene Lagergasse eingesetzt werden. Auch das Kommissionieren an der Entnahmeseite des Regals erfolgt oftmals noch von Hand.

Bekannt sind jedoch auch rechnergesteuert verfahrbare Entnahmevorrichtungen in Gestalt von Fördergeräten, die in einem auf der Kommissionierseite des Regals angeordneten Gang verfahrbar sind und entsprechend dem Kommissionierauftrag die in den einzelnen Lagergassen vorrätig gehaltenen Stückgüter übernehmen und zu einem Auftrag zusammenstellen. Die hierbei verwendeten Fördereinrichtungen sind über entsprechende Führungen in zwei Koordinaten verfahrbar, so daß von der Fördereinrichtung jede der übereinander und nebeneinander angeordneten Lagergassen einzeln angefahren werden kann.

Ein Kommissionierlager mit den eingangs angegebenen Merkmalen ist aus der US 4,915,566 bekannt. Der Transport in den Lagergassen erfolgt unter Zuhilfenahme der Schwerkraft, indem die aus frei laufenden Rollen bestehenden Lagergassen geringfügig geneigt sind. Am Ende der Lagergassen laufen die Waren gegen eine Sperre, die sich im Bereich eines gegenüber der Rollenbahn anhebbaren, kurzen Rollenbahnabschnitts befindet. Wird dieser Rollenbahnabschnitt abgesenkt, kann die vorderste Ware mit einem Teil ihrer Länge auf den Rollenbahnabschnitt rollen, bis sie an der Sperre zum Stillstand kommt. Wird sodann der Rollenbahnabschnitt wieder angehoben, so erfolgt hierdurch das Anheben der ersten Ware über die Sperre hinüber und zugleich ein Zurückhalten der nachfolgenden Waren. Die so erzielte Trennung der vordersten Ware von den sich dahinter rückstauenden weiteren Waren ist in ihrer technischen Realisierung aufwendig. Schwierig gestalten kann sich insbesondere die räumliche Zuordnung des vertikal verlagerbaren Rollenbahnabschnittes in Bezug auf die Anordnung der Sperre. Die Verhältnisse sind auf eine bestimmte Abmessung und Gewichtsverteilung der zu kommissionierenden Ware abgestimmt. Sollen hingegen Waren anderer Größe kommissioniert werden, funktioniert das System nicht mehr bzw. erst nach einem Umbau, welcher den geänderten geometrischen Verhältnissen Rechnung trägt. Des weiteren spielt auch die Gewichtsverteilung innerhalb der Warengebinde eine Rolle. Ist diese ungleichmäßig, vermag der Rollenbahnabschnitt unter Umständen die zu trennende Ware nicht mehr sicher anzuheben.

Der Erfindung liegt die **Aufgabe** zugrunde, ein Kommissionierlager zu schaffen, welches sich auch für die gleichzeitige Verarbeitung hinsichtlich Gewicht und Größe sehr unterschiedlicher Stückgüter eignet.

Zur **Lösung** wird bei einem Kommissionierlager der eingangs genannten Art vorgeschlagen, daß die Rollen oder Walzen der Rollenbahn über ein gemeinsames Antriebsmittel in Drehung versetzbar sind, daß Bestandteile jeder Entnahmevorrichtung ein in seiner Sperrstellung in den Förderweg der Rollenbahn ragendes, durch Betätigung absenkbares Rückhalteelement, an dem sich die hintereinander liegend in der Lagergasse angeordneten Waren stauen, sowie ein in Förderrichtung hinter dem Rückhalteelement angeordneter Horizontalförderer sind, daß das Rückhalteelement mit Rückstellmitteln versehen ist, die das Rückhalteelement mit einer Rückstellkraft in Richtung seiner Sperrbewegung beaufschlagen, wobei die Rückstellkraft geringer ist als die Gewichtskraft der in der Lagergasse lagernden Waren/Warengebinde und daß die Fördergeschwindigkeit des Horizontalförderers größer als die Fördergeschwindigkeit der angetriebenen Rollenbahn ist.

Ein solches Kommissionierlager ist für die Kommissionierung hinsichtlich ihres Gewichtes und ihrer Größe unterschiedlicher Stückgüter geeignet. Durch Verwendung einer Rollenbahn für jede Lagergasse, deren Rollen oder Walzen über ein gemeinsames Antriebsmittel in Drehung versetzbar sind, werden leichte wie schwergewichtige, große wie kleine Stückgüter bzw. Gebinde gleichermaßen sicher transportiert und bevorratet. Selbst in der herkömmlichen Kommissioniertechnik kritische Stückgüter, wie z. B. gefüllte Getränkekisten aus Kunststoff, lassen sich störungsfrei verarbeiten. Eine sichere und störungsfreie Trennung der jeweils vordersten, zu entnehmenden Ware von den dahinter angeordneten, mittels der Antriebseinrichtung der Rollenbahn nachgeförderten Waren wird erreicht, indem Bestandteile jeder Entnahmevorrichtung ein durch Betätigung absenkbares Rückhalteelement sowie ein hinter dem Rückhalteelement angeordneter Horizontalförderer sind. Das Rückhalteelement ist mit Rückstellmitteln versehen, die das Rückhalteelement mit einer Rückstellkraft in Richtung seiner Sperrbewegung beaufschlagen, wobei die Rückstellkraft geringer ist als die Gewichtskraft der Waren/Warengebinde. Diese Rückstellkraft kann z. B. durch die Gewichtskraft oder die Kraft einer geeigneten Rückstellfeder erzeugt werden. Zur sicheren Trennung trägt ferner bei, daß die Fördergeschwindigkeit des in Förderrichtung hinter dem Rückhalteelement angeordneten Horizontalförderers größer als die Fördergeschwindigkeit der angetriebenen Rollenbahn ist. Vorzugsweise ist die Fördergeschwindigkeit des Horizontalförderers mindestens 25 % größer als die Fördergeschwindigkeit der Rollenbahn. Das erfindungsgemäße Kommissionierlager ermöglicht eine hohe Umschlaggeschwindigkeit, bei der es bei voller Ausnutzung letztlich sogar möglich wäre, Waren aus sämtlichen Lagergassen gleichzeitig zu entnehmen und zu einem Kommissionsauftrag zusammenzustellen.

Gemäß einer bevorzugten Ausgestaltung des Kommissionierlagers ist das gemeinsame Antriebsmittel ein endloser Antriebsriemen, und der Antriebsriemen weist eine erste und eine zweite Gruppe von Längsabschnitten auf, wobei sich die Längsabschnitte beider Gruppen jeweils abwechseln, die Längsabschnitte der ersten Gruppe einreib- und/oder formschlüssiges Antriebsmoment auf die Rollen bzw. Walzen ausüben, und die Längsabschnitte der zweiten Gruppe ein im Vergleich geringeres oder kein Antriebsmoment auf die Rollen bzw. Walzen ausüben. Ein solcher Antriebsriemen mit unterschiedlich stark wirkenden Längsabschnitten führt zu einem reduzierten Förderdruck der Rollenbahn, so daß vor allem auf die an erster Stelle am entnahmeseitigen Ende der Lagergasse angeordneten Stückgüter nur ein geringer Druck ausgeübt wird. Dies ist gerade im Fall stoß- oder druckempfindlicher Waren oder Gebinde von Vorteil. Von Vorteil ist ferner, daß die Entnahmevorrichtungen des Kommissionierbereichs wegen des geringeren Staudrucks mit geringeren Antriebsleistungen betrieben werden können.

Vorzugsweise setzt sich der Antriebsriemen aus einem durchgehenden und über die gesamte Länge gleichbleibend dicken Grundkörper sowie aus auf dem Grundkörper abschnittsweise befestigten Antriebsabschnitten zusammen, welche die Längsabschnitte der ersten Gruppe bilden. Zur Erzielung eines schlupffreien Formschlusses ist es ferner von Vorteil, wenn die Antriebsabschnitte auf ihrer Außenseite gezahnt sind, und die so gebildete Verzahnung mit einer entsprechenden Gegenverzahnung auf dem Umfang der Rollen bzw. Walzen der Rollenbahn kämmt.

Zur Erzielung einer hinreichenden konstruktiven Freiheit bei der Gestaltung der Antriebs- und Umlenkeinrichtungen für das Antriebsmittel der Rollenbahn wird ferner vorgeschlagen, daß die Umlenkung des Antriebsriemens über Umlenkrollen erfolgt, die sich in oder unter dem Bestückungsbereich und/oder dem Kommissionierbereich befinden.

Zur Erzielung eines geringen Antriebsschlupfes bei zugleich kostengünstiger Gestaltung der Rollenbahn wird ferner vorgeschlagen, daß der Antriebsriemen zwischen den Rollen bzw. Walzen und einem Druckwiderlager hindurchgeführt ist, und daß das Druckwiderlager ein langgestrecktes Profil ist, welches mit einem Rollenbahnprofil verbunden ist, an dem die einzelnen Rollen bzw. Walzen gelagert sind.

Zur Erzielung einer konstruktiv einfachen Ausgestaltung des Kommissionierbereichs wird ferner vorgeschlagen, daß der Antrieb einer Mehrzahl der Horizontalförderer über eine gemeinsame Antriebswelle erfolgt, die sich quer zu den Lagergassen erstreckt.

Vorgeschlagen wird ferner eine gesteuert schaltbare Kupplung zum zeitlich begrenzten Ableiten einer den Förderweg freigebenden Entsperrbewegung des Rückhalteelements aus der Drehbewegung der gemeinsamen Antriebswelle, wobei die Kupplung jeder Entnahmevorrichtung getrennt von den übrigen Kupplungen ansteuerbar ist.

Anders als für die Entsperrbewegung ist es für die spätere erneute Sperrbewegung des Rückhalteelements nicht erforderlich, auf die vorhandenen motorischen Antriebe zurückzugreifen. Vielmehr reicht es aus, daß das Rückhalteelement mit den Rückstellmitteln versehen ist, die das Rückhalteelement mit eine Rückstellkraft in Richtung seiner Sperrbewegung beaufschlagen.

Bei der Kupplung handelt es sich vorzugsweise um eine die gemeinsame Antriebswelle ringförmig umschließende Magnetkupplung, deren Abtriebsteil ein Nokken ist, der bei Ansteuerung der Magnetkupplung gegen das Rückhalteelement schwenkt.

Mit dem Ziel einer kompakten Gestaltung des Kommissionierbereichs wird vorgeschlagen, daß sich der Horizontalförderer aus einer ersten, drehfest und koaxial mit der Antriebswelle verbundenen Riemenscheibe, mindestens einer weiteren, mitlaufenden Riemenscheibe sowie einem über die Riemenscheiben geführten, endlosen Riemen zusammensetzt, wobei die angetriebene Riemenscheibe das vordere Ende und die mitlaufende Riemenscheibe das hintere Ende des Horizontalförderers definiert.

Eine Ausgestaltung des Bestückungsbereiches des erfindungsgemäßen Kommissionierlagers ist gekennzeichnet durch eine sich quer zu den Lagergassen erstrekkende, aus einzelnen Transportwalzen zusammengesetzte Transportbahn für neu einzulagernde Waren, wobei zwischen den Transportwalzen jeder Lagergasse getrennt betätigbare Querförderer mit Förderrichtung in Richtung zu der jeweiligen Lagergasse angeordnet sind. Vorzugsweise setzt sich der Querförderer aus Riemenscheiben zusammen, über die ein endloser Antriebsriemen geführt ist, auf dessen Außenseite Mitnehmerelemente befestigt sind, die, wenn sie sich auf dem Obertrum des Antriebsriemens befinden, bis über die Förderfläche der Transportwalzen ragen. Transportmittel des Querförderers sind daher nicht die Riemen selbst, sondern die darauf befestigten Mitnehmerelemente. Deren Abstand auf dem Antriebsriemen ist vorzugsweise größer als die Länge des Obertrums. Hierdurch ist sichergestellt, daß die Mitnehmerelemente nicht die Bewegung der Stückgüter entlang der aus den Transportwalzen zusammengesetzten Transportbahn behindern.

In weiterer Ausgestaltung des Kommissionierlagers wird vorgeschlagen, daß der Antrieb einer Mehrzahl der Querförderer über eine gemeinsame Hauptantriebswelle erfolgt, und daß jeder Querförderer über eine eigene Kupplung zum Ableiten seiner Bewegung aus der Drehbewegung der Hauptantriebswelle verfügt, wobei die Kupplung jedes Querförderers getrennt von den übrigen Kupplungen ansteuerbar ist. Als Kupplung kommt auch hier vorzugsweise eine Magnetkupplung zum Einsatz. Zwecks baulicher Vereinfachung wird schließlich vorgeschlagen, daß auch die Bewegung des gemeinsamen Antriebsmittels der Rollenbahn aus der Drehbewegung der Hauptantriebswelle abgeleitet wird, vorzugsweise über ein Umkehrgetriebe und eine für jede Rollenbahn individuell ansteuerbare Kupplung und vorzugsweise Magnetkupplung. Auf diese Weise wird die Zahl der notwendigen Antriebsaggregate, z. B. Elektromotoren, auf ein Mindestmaß reduziert. Im Vergleich zu einem separaten elektrischen Antrieb ist die Stromaufnahme der elektrischen Magnetkupplungen nur sehr gering, zumal diese jeweils nur für kurze Zeit angesteuert werden, wohingegen die Hauptantriebswelle kontinuierlich betrieben werden kann.

Nachfolgend wird ein erfindungsgemäßes Kommissionierlager anhand eines Ausführungsbeispieles und unter Bezugnahme auf die Zeichnungen erläutert. Auf den Zeichnungen zeigen:
- Fig. 1: in perspektivischer Darstellung einen Teil eines sich aus einem Bestükkungsbereich, einem Lagerbereich und einem Kommissionierbereich zusammensetzenden Kommissionierlagers;
- Fig. 2: eine Draufsicht auf einen Teil des Kommissionierlagers in vergrößerter Darstellung, wobei aus Gründen der Übersicht der Lagerbereich stark verkürzt dargestellt ist;
- Fig. 3: eine in etwa der Fig. 2 entsprechende Einzeldarstellung einer Lagergasse mit zugehörigem Bestückungsbereich sowie zugehöriger Entnahmevorrichtung;
- Fig. 4: einen Schnitt gemäß der Linie IV - IV der Fig. 3;
- Fig. 5: die Einzelheit V in Fig. 4 in vergrößertem Maßstab:
- Fig. 6: einen Teilschnitt entlang der Linie VI - VI der Fig. 3;
- Fig. 7: in sechs Verfahrensstadien Einzelheiten der Entnahme der Waren auf der Kommissionierseite des Kommissionierlagers und
- Fig. 8: in sechs Verfahrensstadien Einzelheiten der Beschickung der Lagergasse im Bestückungsbereich des Kommissionierlagers.

Das Kommissionierlager für Stückgüter einschließlich gefüllter Getränkekisten und für Lebensmittel in Kartongebinden, die im Großhandel eine sehr hohe Umschlagrate haben, setzt sich in erster Linie aus einem Lagerbereich 1, einem dem Lagerbereich 1 vorgeschalteten Bestückungsbereich 2 und einem dem Lagerbereich 1 nachgeschalteten Kommissionierbereich 3 zusammen. In dem Bestükkungsbereich 2 erfolgt die Einlagerung neu einzulagernder Stückgüter in den richtigen Lagerort innerhalb des Lagerbereiches 1. In dem Kommissionierbereich 3 werden die einzelnen Stückgüter entsprechend der Kommission rechnergesteuert aus dem Lagerbereich 1 entnommen und an einen Ort gefördert, an dem dann die Zusammenstellung und gegebenenfalls Verpackung der Kommissionen zu größeren Verpackungsgebinden erfolgt. Zur Entnahme der einzelnen Waren aus dem Lagerbereich 1 sind Entnahmevorrichtungen 4 vorgesehen, die die aus dem Lagerbereich 1 einzeln entnommenen Waren auf eine nachgeordnete Transportbahn 5 ablegen, entlang der dann der Weitertransport der Waren erfolgt.

Auch die Zuförderung der Waren im Bestückungsbereich 2 erfolgt mittels einer kontinuierlich angetriebenen Transportbahn 6, die sich, ebenso wie die Transportbahn 5 des Kommissionierbereichs 3, aus einer Vielzahl angetriebener Transportwalzen 6a zusammensetzt, auf denen die transportierten Stückgüter entlangrollen.

Der Lagerbereich 1 setzt sich aus einer Mehrzahl in einheitlicher Höhe horizontal angeordneter und parallel zueinander ausgerichteter Lagergassen 7 zusammen. Die Lagergassen 7 bestehen aus Rollenbahnen 8 aus Rollen oder Walzen, die zu ihren beiden Seiten in Profilen gelagert sind. Durch Begrenzungen 9 sind die einzelnen Lagergassen 7 voneinander getrennt, so daß Waren nicht versehentlich in benachbarte Lagergassen gelangen können. Im Rahmen der nachfolgend näher erläuterten Ausgestaltungen kann die Funktion der Begrenzungen 9, d. h. die seitliche Führung der Waren, auch durch Spurkränze an den Rollen bzw. Walzen erzielt werden.

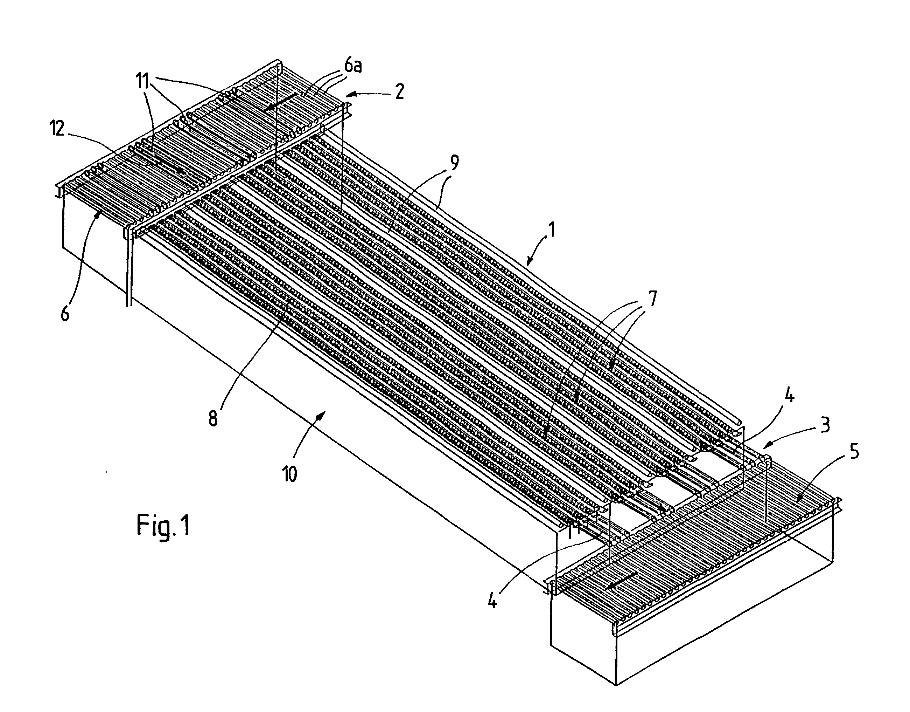

Bei dem Kommissionierlager befinden sich in jeder Lagergasse 7 ausschließlich Waren bzw. Stückgüter derselben Art. Bei dem in Fig. 1 dargestellten, aus insgesamt vier Lagergassen bestehenden Lagerbereich 1 ist daher eine Lagerung von vier unterschiedlichen Warenarten möglich. Die Waren derselben Warenart sind hintereinander liegend in der jeweiligen Lagergasse 7 angeordnet, wobei sie sich infolge eines nachfolgend noch näher beschriebenen Antriebes der Rollenbahn bis an das dem Kommissionierbereich 3 zugewandte Ende der Lagergasse 7 bewegen, und die vorderste Ware dort an einem Rückhalteelement festgehalten wird.

Die in Fig. 1 dargestellten insgesamt vier Lagergassen 7 bilden gemeinsam ein Modul 10. Mehrere solcher Module können nebeneinander angeordnet werden, so daß sich, abhängig von den räumlichen Gegebenheiten, bis zu 100 Lagergassen nebeneinander und mit gemeinsamen Einrichtungen des Bestückungsbereichs 2 und des Kommissionierbereichs 3 anordnen lassen. Zusätzlich kann das dargestellte Kommissionierlager auch mehrfach übereinander angeordnet werden, um so eine Vervielfachung der Platzausnutzung zu erreichen.

Die Transportbahn 6 ist allen Lagergassen 7 gemeinsam, weshalb über die Transportbahn 6 auch Waren unterschiedlicher Art herangefördert werden. Um diese Waren in die jeweils richtige Lagergasse 7 einzuordnen, ist jeder Lagergasse ein eigener Querförderer 11 mit Förderrichtung 12 in Richtung auf die Lagergasse angeordnet. Die Ansteuerung des jeweiligen Querförderers 11 erfolgt vollautomatisch in Abhängigkeit von der jeweils über die Transportbahn 6 zugeführten Warengruppe. Deren Identifizierung kann z. B. anhand eines Barcodes erfolgen, der sich auf den Stückgütern befindet.

Fig. 1 läßt als Prinzipdarstellung nicht erkennen, daß sich auf der anderen, den Lagergassen 7 abgewandten Seite der Transportbahn 6 ein zweiter Kommissionierbereich befinden kann, so daß sich über die Transportbahn 6 zu beiden Seiten hin Kommissionierbereiche beschicken lassen. Selbstverständlich sollten in diesem Fall auch die Querförderer 11 in beiden Richtungen transportieren können.

In dem Kommissionierbereich 3 werden die Waren mittels der Entnahmevorrichtung 4 einzeln aus den Lagergassen 7 entnommen und auf die gemeinsame Transportbahn 5 überführt, die sich quer zu den Lagergassen erstreckt. Jeder einzelnen Lagergasse 7 ist eine eigene Entnahmevorrichtung 4 zugeordnet, weshalb Waren zugleich aus mehreren Lagergassen 7 entnommen und auf die hinreichend breit gestaltete Transportbahn 5 überführt werden können.

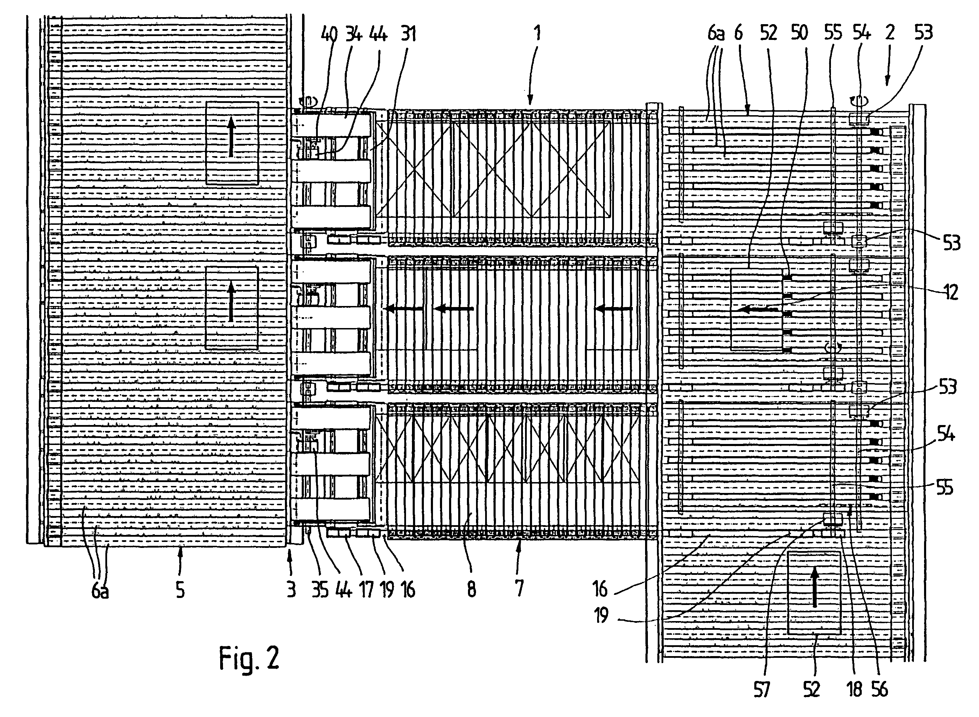

Einzelheiten und Funktionsweise der Rollenbahnen 8 des Lagerbereichs werden nachfolgend anhand der Fign. 2 bis 6 erläutert.

Die Walzen 15 jeder Rollenbahn sind über ein allen Walzen der Rollenbahn gemeinsames Antriebsmittel in Drehung versetzbar. Dieses gemeinsame Antriebsmittel ist ein endloser Antriebsriemen 16, der über Umlenkrollen 17, 18 geführt ist. Die Umlenkrolle 17 befindet sich unter dem Kommissionierbereich 3, und die Umlenkrolle 18 unter dem Bestückungsbereich 2 des Kommissionierlagers. Zusätzlich vorgesehen sind geeignete Spannrollen 19, die den für den ordnungsgemäßen Transport des Antriebsriemens 16 erforderlichen Spanndruck auf den Antriebsriemen erzeugen. Diese Spannung kann jedoch auch unmittelbar über die Umlenkrollen 17 bzw. 18 erzeugt werden.

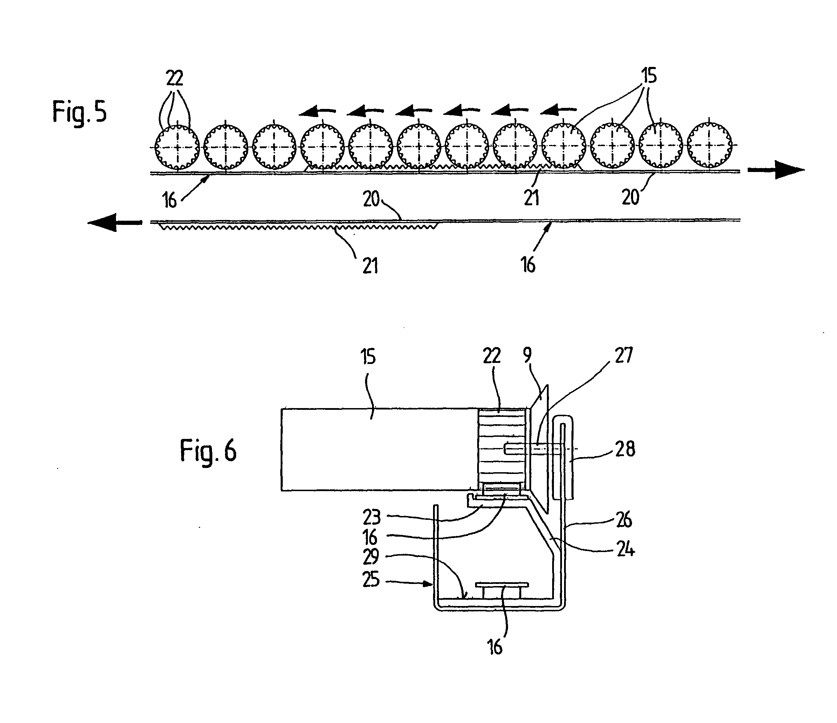

Die Fign. 5 und 6 lassen erkennen, wie der Antriebsriemen 16 den Antrieb der einzelnen Walzen 15 der Rollenbahn bewirkt. Der Antriebsriemen 16 besteht aus einem durchgehenden und über seine gesamte Länge gleichbleibend dicken Grundkörper 20 sowie aus auf dem Grundkörper 20 abschnittsweise befestigten Antriebsabschnitten 21 in Gestalt von gezahnten Bändern. Die Antriebsabschnitte 21 bedecken jedoch nur einen Teil der Länge des Antriebsriemens 16, so daß sich zwischen den Antriebsabschnitten 21 jeweils weitere Abschnitte finden, die keine Verzahnung aufweisen. Beide Gruppen, d. h. die mit den Antriebsabschnitten 21 versehenen Abschnitte des Antriebsriemens 16, und die nur aus dem Grundkörper 20 bestehenden Abschnitte des Antriebsriemens 16, wechseln sich ab, wobei vorzugsweise die Distanzen zwischen aufeinanderfolgenden Antriebsabschnitten 21 gleich groß sind.

Die Walzen 15 sind an ihren Enden mit einer Gegenverzahnung 22 versehen, die mit der Zahnung der Antriebsabschnitte 21 kämmt. Auf diese Weise werden nur jene Walzen 15 angetrieben, an deren Unterseite gerade einer der Antriebsabschnitte 21 vorbeistreicht. Diejenigen Walzen 15 hingegen, unter denen sich gerade nur der Grundkörper 20 des Antriebsriemens 16 befindet, werden nicht angetrieben.

Damit der Antriebsriemen 16 im Bereich seiner Antriebsabschnitte 21 sicher mit der Gegenverzahnung 22 der Walzen 15 kämmt, muß die sich ergebende Reaktionskraft aufgenommen werden. Hierzu dient ein Druckwiderlager 23, welches sich in Gestalt einer durchgehenden Fläche über die gesamte Länge der Rollenbahn 8 erstreckt. Der Obertrum des Antriebsriemens 16 wird also zwischen dem Druckwiderlager 23 und den einzelnen Walzen 15 hindurchgezogen. Der Abstand ist der Gestalt, daß die Antriebsabschnitte 21 des Antriebsriemens 16 spielfrei durch diesen Spalt hindurchgezogen werden, so daß ein echtes Kämmen zwischen Verzahnung und Gegenverzahnung 22 erfolgt. Das Druckwiderlager 23 wird durch die flache Oberseite eines Profils 24 gebildet, welches in ein Rollenbahnprofil 25 eingesetzt ist. Ein äußerer Schenkel 26 des Rollenbahnprofils 25 dient der Lagerung der einzelnen Rollen bzw. Walzen 15. Die Rollen bzw. Walzen 15 sind hierzu mit kurzen Achsen 27 versehen, die über aufsteckbare Clips 28 an dem äußeren Schenkel 26 des Rollenbahnprofils 25 befestigt sind. Die Clips 28 ermöglichen es, einzelne Walzen schnell und einfach gegen andere Walzen auszutauschen. Beim Rücktransport läuft der Untertrum des Antriebsriemens 16 innerhalb des Rollenbahnprofils 25, vorzugsweise, wie dies Fig. 6 erkennen läßt, auf der glattflächig gestalteten Oberseite 29 des Profils 24.

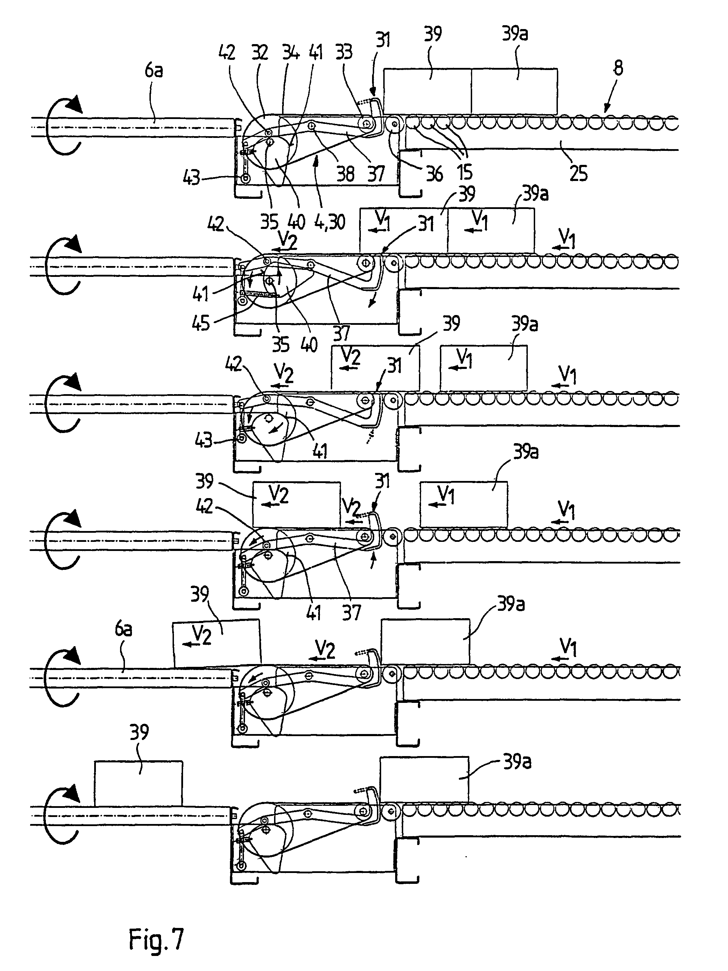

Anhand der Fig. 7 werden nachfolgend Einzelheiten und Funktionsweise der Entnahmevorrichtungen 4 erläutert.

Jede Entnahmevorrichtung 4 setzt sich aus einem Horizontalförderer 30 und einem Rückhalteelement 31 zusammen. Der Horizontalförderer 30, dessen Förderebene gleich der Förderebene der Rollenbahn 8 ist, besteht aus zwei Riemenscheiben 32, 33, über die ein breiter Riemen 34 geführt ist. Jeder Horizontalförderer 30 besteht aus insgesamt drei dieser Riemen 34. Die Riemenscheibe 32, welche weiter von der Rollenbahn 8 entfernt ist, ist angetrieben und sitzt hierzu unmittelbar auf einer Antriebswelle 35. Die Antriebswelle 35 ist kontinuierlich angetrieben und treibt gleichzeitig die Horizontalförderer 30 mehrerer Lagergassen an. Alle Horizontalförderer 30 laufen daher im Dauerbetrieb. Anders als die Riemenscheibe 32, ist die jeweils andere Riemenscheibe 33 des Horizontalförderers 30 nicht angetrieben. Die Riemenscheibe 33 befindet sich möglichst nahe an der Rollenbahn 8. Beim Ausführungsbeispiel befindet sie sich zwischen der Riemenscheibe 33 und der nächstgelegenen Walze 15 der Rollenbahn noch eine kleinere, frei mitlaufende Rolle 36.

Bestandteil des Rückhalteelements 31 der Entnahmevorrichtung 4 ist ferner ein Hebel 37, an dessen Ende sich das Sperrorgan des Rückhalteelements befindet. Der Hebel 37 ist an einer horizontalen Achse 38 gelagert. Das Rückhalteelement 31 ist zwischen zwei Stellungen um die Achse 38 hin- und herschwenkbar. In der ersten Stellung welche in Fig. 7 oben dargestellt ist, ragt das Sperrorgan des Rückhalteelements 31 in den Förderweg für die Waren 39. In seiner anderen Stellung senkt sich das Rückhalteelement 31 bis in die Förderebene oder darunter ab. Diese Stellung des Rückhalteelementes 31 ist in den an zweiter und dritter Stelle dargestellten Verfahrensstadien der Fig. 7 zu entnehmen.

Um das Rückhalteelement 31 aus seiner Sperrstellung in seine Entsperrstellung zu überführen, ist ein Nocken 40 vorgesehen, der auf einer zu der Antriebswelle 35 koaxialen Achse gelagert ist. Der Nocken 40 verfügt über eine Nockenfläche 41, die an einer Rolle 42 abläuft, wobei die Rolle 42 sich an dem Hebel 37 befindet. Beim Ausführungsbeispiel ist der Hebel 37 ein zweiarmiger Hebel, wobei sich am Ende des einen Arms das Sperrorgan befindet, wohingegen auf der Länge des anderen Arms die Rolle 42 gelagert ist.

Wird der Nocken 40, wie dies im Wechsel vom ersten Verfahrensstadium der Fig. 7 auf das zweite Verfahrensstadium erkennbar ist, um ca. 90° verschwenkt, führt dies infolge des Zusammenwirkens der Nockenfläche 41 mit der Rolle 42 zu einem Verschwenken des Hebels 37, wodurch sich das Rückhalteelement 31 bis unter die Förderebene der Rollenbahn absenkt. Die erste Ware 39 wird von diesem Zeitpunkt an nicht mehr durch das Rückhalteelement 31 zurückgehalten und rollt daher, angetrieben durch die Rollenbahn, auf den Horizontalförderer 30. Sobald die Unterseite der ersten Ware 39 in Kontakt mit dem Riemen 34 des Horizontalförderers 30 kommt, folgt die Ware 39 fortan der Geschwindigkeit des Horizontalförderers 30. Diese ist - abhängig vom Warengewicht - um mindestens 25 % höher, als die Fördergeschwindigkeit der Rollenbahn 8. Infolge dieser höheren Geschwindigkeit auf dem Horizontalförderer 30 trennt sich die erste Ware 39 von der nachfolgenden Ware 39a. In Fig. 7 ist dies mit den unterschiedlichen Geschwindigkeiten V₂ und V₁ wiedergegeben, wobei V₂ größer als V₁ ist.

In dem dritten Verfahrensstadium gemäß Fig. 7 überrollt die Ware 39, gefördert nahezu ausschließlich durch den Horizontalförderer 30 mit dessen Geschwindigkeit, das Rückhalteelement 31. Zu diesem Zeitpunkt hat sich der Nocken 40 infolge einer Zeitsteuerung bereits wieder abgesenkt. Gleichwohl verharrt das Rückhalteelement 31 in seiner abgesenkten Stellung, da seine Rückstellkraft geringer ist, als das Gewicht der Ware 39. Die genannten Rückstellkraft wird durch ein Gegengewicht 43 erzeugt, welches am zweiten Arm des Hebels 37 hängt. Erst wenn, wie dies im vierten Verfahrensstadium der Fig. 7 dargestellt ist, die Unterseite der Ware 39 über das Rückhalteelement 31 hinweggelangt ist, kann der Hebel 37 des Rückhalteelements unter der Wirkung des Gegengewichtes 43 wieder nach oben schwenken. Fortan ist die Bahn wieder blockiert, so daß die nachfolgende Ware 39a an dem Rückhalteelement 31 gestoppt wird. Es kann dann der nächste Entnahmevorgang eingeleitet werden, wobei sich das Verfahren wiederholt. Die von dem Horizontalförderer 30 abgeförderte Ware 39 gelangt auf die Transportwalzen 6a der kontinuierlich angetriebenen Transportbahn 5.

Der Antrieb des Nockens 40 wird von der kontinuierlichen Drehbewegung der Antriebswelle 35 abgeleitet. Hierzu sitzt auf der Antriebswelle 35 eine elektrische Magnetkupplung 44, deren Abtriebsteil der Nocken 40 ist. Nur bei der zeitlich begrenzten Erregung der Magnetkupplung 44 erfolgt daher eine Betätigung des Nokkens 40 und damit die Entsperrung des Rückhalteelements 31. Die hierfür aufzubringende Antriebskraft ist relativ gering, weshalb für den Antrieb des Nockens 40 bereits eine kleine Magnetkupplung auf der Antriebswelle 35 ausreicht. Eine Zugfeder 45 zieht den Nocken 40 in seine Ruhestellung zurück.

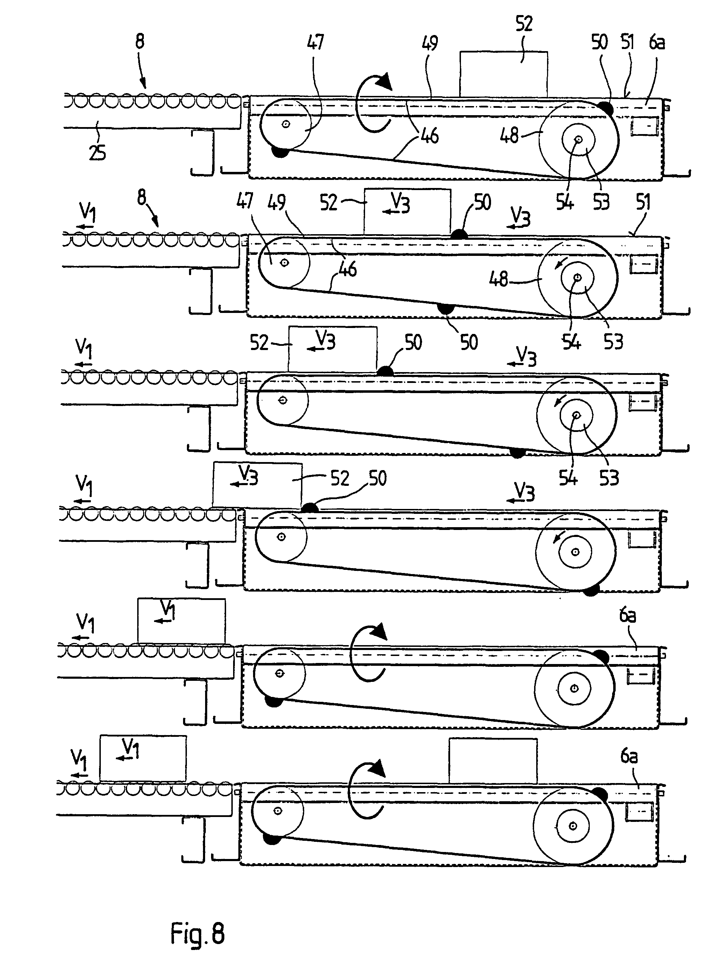

Anhand der Fig. 8 werden nachfolgend Einzelheiten und Funktionsweise des Querförderers 11 im Bestückungsbereich 2 des Kommissionierlagers erläutert. Vor jeder Lagergasse befindet sich ein eigener, dieser Lagergasse zugewiesener Querförderer 11. Der Querförderer 11 arbeitet, ebenso wie dies voranstehend für den Kommissionierbereich erläutert wurde, unter Verwendung endloser Riemen 46, die über Riemenscheiben 47, 48 geführt sind. Zur Vermeidung von Schlupf sind Riemen 46 und Riemenscheiben 47, 48 mit ineinandergreifenden Verzahnungen versehen. Auch eine Kette anstelle des Riemens 46 sowie Ritzel anstelle der Riemenscheiben 47, 48 sind einsetzbar.

Der Obertrum 49 des Riemens 46 befindet sich etwas tiefer, als die Oberseite der Transportwalzen 6a. Riemen 46 und die Riemenscheiben 47, 48 sind relativ schmal gestaltet, so daß sie zwischen zwei aufeinanderfolgenden Transportwalzen 6a der Transportbahn 6 Platz finden. Auf der Außenseite jedes endlosen Riemens 46 sind Mitnehmerelemente 50 angeordnet, die zusammen mit dem Riemen 46 umlaufen können. Die Mitnehmerelemente 50 ragen, wenn sie sich auf dem Obertrum des Antriebsriemens 46 befinden, bis über die Förderfläche 51 der Transportbahn 6.

Die oberste Darstellung in Fig. 8 läßt erkennen, daß der Abstand der Mitnehmerelemente 50 etwas größer ist, als die Länge des Obertrums 49. Auf diese Weise ragt in dem Verfahrensstadium, wie es in Fig. 8 an oberster Stelle dargestellt ist, keines der beiden Mitnehmerelemente 50 über die Förderfläche 51 und damit in den Förderweg der Transportbahn. Erst nach dem Einschalten des Querförderers 11 taucht der äußere der beiden Mitnehmerelemente 50 auf und ergreift die Ware 52, so daß diese längs der jeweiligen Transportwalzen 6a bis in die Lagergasse 7 hineingeschoben wird. Beim Ausführungsbeispiel sind insgesamt zwei Mitnehmerelemente 50 vorgesehen. jedoch kann deren Anzahl auch geringer oder größer sein, was letztlich von der Breite der Transportbahn 6 abhängt.

Der Antrieb der Transportriemen 46 des Querförderers 11 erfolgt ebenfalls unter Verwendung von Magnetkupplungen 53. Die Magnetkupplungen 53 sitzen auf einer allen Querförderern 11 gemeinsamen Hauptantriebswelle 54 und lassen sich für jede Lagergasse getrennt ansteuern. Bei Bestromung stellen die Magnetkupplungen 53 eine Momentenverbindung der Riemenscheibe 48 mit der Hauptantriebswelle 54 her, wodurch der jeweilige Antriebsriemen 46 solange in Betrieb gesetzt wird, wie die Magnetkupplung 53 bestromt ist.

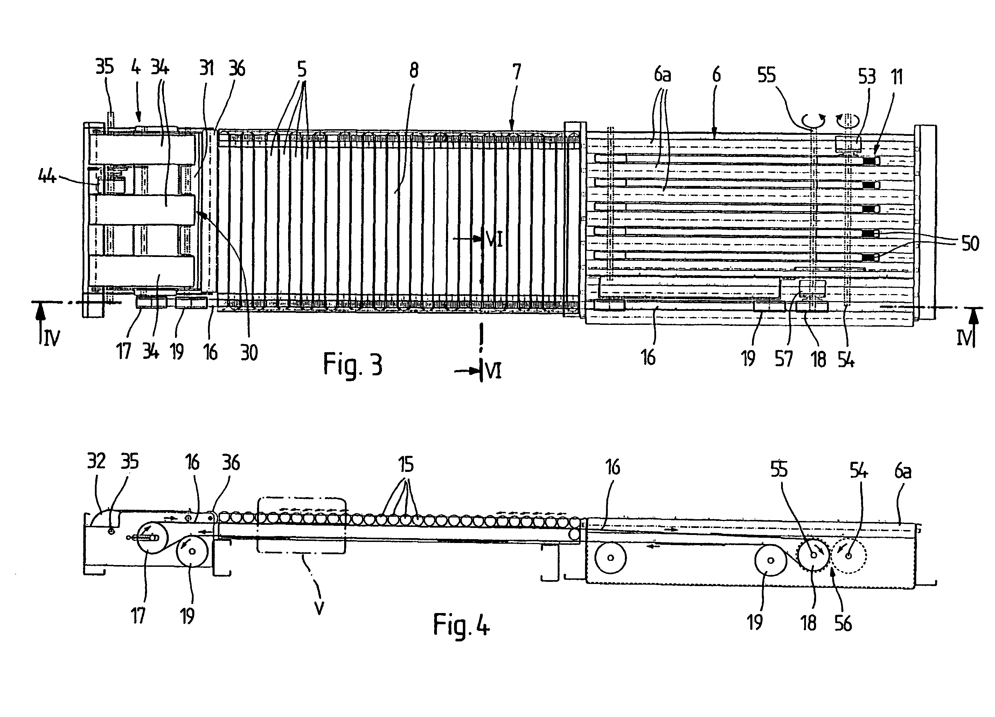

Insbesondere Fig. 4 läßt erkennen, daß von der Hauptantriebswelle 54 nicht nur die Bewegung sämtlicher Querförderer 11 abgeleitet wird, sondern auch der Antrieb der Rollenbahn 8. Hierzu erstreckt sich parallel zu der Hauptantriebswelle 54 eine weitere Welle 55, wobei der Antrieb der weiteren Welle 55 mittels eines Umkehrgetriebes 56 von der Hauptantriebswelle 54 abgeleitet wird. Das Umkehrgetriebe 56 besteht aus zwei gegenläufigen Zahnrädern, die drehmomentfest auf Hauptantriebswelle 54 bzw. Welle 55 sitzt. Über eine weitere Magnetkupplung 57 sitzt auf der Welle 55 die Umlenkrolle 18, welche die Antriebsrolle für den Antriebsriemen 16 ist. Während also die Welle 55, angetrieben durch die Hauptantriebswelle 54, dauernd läuft, erfolgt eine Drehmomentübertragung auf die Umlenkrolle 18 nur bei Betätigung der Magnetkkupplung 57. Auf diese Weise ist es möglich, gesteuert durch die Magnetkupplung 57, die jeweilige Rollenbahn 8 nur bei Bedarf anzutreiben. Dies ist dann der Fall, wenn im Bestückungsbereich 2 neue Waren in die Lagergasse eingelagert werden sollen, oder im Kommissionierbereich eine Ware aus dieser Lagergasse entnommen werden soll. Ansonsten kann die Rollenbahn dieser Lagergasse durch Nichtbetätigung der Magnetkupplung 57 ruhen, so daß die dortige Ware nicht unnötig durch Reibung belastet wird.

Schließlich läßt Fig. 3 noch erkennen, daß sich jeder Querförderer 11 aus mehreren Transportriemen 46 zusammensetzt, beim Ausführungsbeispiel jeweils vier Transportriemen. Hierdurch wird ein besserer und ruhigerer Quertransport der Waren 52 in die jeweilige Lagergasse erzielt. Während dieses Quertransportes stehen die Transportwalzen 6a der Transportbahn 6 still.

Es versteht sich von selbst, daß das beschriebene Kommissionierlager programmgesteuert arbeitet. Trotz der Komplexität ist der Steuerungsaufwand relativ gering, da die überwiegende Zahl der Prozesse durch Ein- und Ausschalten der nahezu wartungsfrei arbeitenden Magnetkupplungen 44, 53, 57 kontrolliert wird.

### Bezugszeichenliste

- 1: Lagerbereich
- 2: Bestückungsbereich
- 3: Kommissionierbereich
- 4: Entnahmevorrichtung
- 5: Transportbahn
- 6: Transportbahn
- 6a: Transportwalze
- 7: Lagergasse
- 8: Rollenbahn
- 9: Begrenzung, Spurkranz
- 10: Modul
- 11: Querförderer
- 12: Förderrichtung
- 15: Walze
- 16: Antriebsriemen
- 17: Umlenkrolle
- 18: Umlenkrolle
- 19: Spannrolle
- 20: Grundkörper
- 21: Antriebsabschnitt
- 22: Gegenverzahnung
- 23: Druckwiderlager
- 24: Profil
- 25: Rollenbahnprofil
- 26: Schenkel
- 27: Achse
- 28: Clip
- 29: Oberseite
- 30: Horizontalförderer
- 31: Rückhalteelement
- 32: Riemenscheibe
- 33: Riemenscheibe
- 34: Riemen
- 35: Antriebswelle
- 36: Rolle
- 37: Hebel
- 38: Achse
- 39: zu entnehmende Ware
- 39a: nachfolgende Ware
- 40: Nocken
- 41: Nockenfläche
- 42: Rolle
- 43: Gegengewicht
- 44: Magnetkupplung
- 45: Zugfeder
- 46: Transportriemen
- 47: Riemenscheibe
- 48: Riemenscheibe
- 49: Obertrum
- 50: Mitnehmerelement
- 51: Förderfläche
- 52: Ware
- 53: Magnetkupplung
- 54: Hauptantriebswelle
- 55: Welle
- 56: Umkehrgetriebe
- 57: Magnetkupplung

## Patentansprüche

1. Kommissionierlager für Stückgüter, bestehend aus
- einem Lagerbereich (1) mit einer Vielzahl sich darin parallel zueinander erstreckender, aus Rollenbahnen (8) bestehender Lagergassen (7) für die zu kommissionierenden Waren, wobei sich in jeder Gasse (7) hintereinander liegend Waren derselben Warenart befinden und jede Lagergasse (7) mit einer eigenen, unabhängig von den übrigen Entnahmevorrichtungen betätigbaren Entnahmevorrichtung (4) versehen ist,
- einem Bestückungsbereich (2) am einen Ende der Lagergassen (7) mit Mitteln zur Einlagerung neuer Waren in die dafür vorgesehenen Lagergassen (7) und
- einem Kommissionierbereich (3) am anderen Ende der Lagergassen (7) mit Entnahmevorrichtungen (4) zur rechnergesteuerten Überführung einzelner Waren aus den Lagergassen (7) auf nachgeordnete Fördereinrichtungen,
**dadurch gekennzeichnet,**
**daß** die Rollen oder Walzen der Rollenbahn (8) über ein gemeinsames Antriebsmittel in Drehung versetzbar sind, daß Bestandteile jeder Entnahmevorrichtung (4) ein in seiner Sperrstellung in den Förderweg der Rollenbahn (8) ragendes, durch Betätigung absenkbares Rückhalteelement (31), an dem sich die hintereinander liegend in der Lagergasse (7) angeordneten Waren stauen, sowie ein in Förderrichtung hinter dem Rückhalteelement (31) angeordneter Horizontalförderer (30) sind, daß das Rückhalteelement (31) mit Rückstellmitteln versehen ist, die das Rückhalteelement (31) mit einer Rückstellkraft in Richtung seiner Sperrbewegung beaufschlagen, wobei die Rückstellkraft geringer ist als die Gewichtskraft der in der Lagergasse (7) lagernden Waren/Warengebinde (39, 39a) und daß die Fördergeschwindigkeit des Horizontalförderers (30) größer als die Fördergeschwindigkeit der angetriebenen Rollenbahn (8) ist.

2. Kommissionierlager nach Anspruch 1, **dadurch gekennzeichnet, daß** das gemeinsame Antriebsmittel ein endloser Antriebsriemen (16) ist, daß der Antriebsriemen (16) eine erste und eine zweite Gruppe von Längsabschnitten aufweist, wobei sich die Längsabschnitte beider Gruppen jeweils abwechseln, und daß die Längsabschnitte der ersten Gruppe ein reib- und/oder formschlüssiges Antriebsmoment auf die Rollen bzw. Walzen (15) ausüben, und die Längsabschnitte der zweiten Gruppe ein im Vergleich geringeres oder kein Antriebsmoment auf die Rollen bzw. Walzen (15) ausüben.

3. Kommissionierlager nach Anspruch 2, **dadurch gekennzeichnet, daß** sich der Antriebsriemen (16) aus einem durchgehenden und über die gesamte Länge gleichbleibend dicken Grundkörper (20) sowie aus auf dem Grundkörper (20) abschnittsweise befestigten Antriebsabschnitten (21) zusammensetzt, welche die Längsabschnitte der ersten Gruppe bilden.

4. Kommissionierlager nach Anspruch 3, **dadurch gekennzeichnet, daß** die Antriebsabschnitte (21) auf ihrer Außenseite gezahnt sind, und daß die so gebildete Verzahnung mit einer entsprechenden Gegenverzahnung (22) auf dem Umfang der Rollen bzw. Walzen (15) der Rollenbahn (8) kämmt.

5. Kommissionierlager nach einem der Ansprüche 2 bis 4, **dadurch gekennzeichnet, daß** die Umlenkung des als Antriebsmittel dienenden Antriebsriemens (16) über Umlenkrollen (18, 17) erfolgt, die sich in oder unter dem Bestückungsbereich (2) und/oder dem Kommissionierbereich (3) befinden.

6. Kommissionierlager nach einem der Ansprüche 2 bis 5, **dadurch gekennzeichnet, daß** der Antriebsriemen (16) zwischen den Rollen bzw. Walzen (15) und einem Druckwiderlager (23) hindurchgeführt ist, und daß das Druckwiderlager (23) ein langgestrecktes Profil (24) ist, welches mit einem Rollenbahnprofil (25) verbunden ist, an dem die einzelnen Rollen bzw. Walzen (15) gelagert sind.

7. Kommissionierlager nach einem der vorangehenden Ansprüche, **dadurch gekennzeichnet, daß** sich entlang der Entnahmevorrichtungen (4) und quer zu den Lagergassen (7) eine vorzugsweise kontinuierlich angetriebene Transportbahn (5) für die mit Hilfe der Entnahmevorrichtungen (4) entnommenen Waren erstreckt.

8. Kommissionierlager nach einem der Ansprüche 1 bis 7, **dadurch gekennzeichnet, daß** die Fördergeschwindigkeit des Horizontalförderers (30) mindestens 25 % größer als die Fördergeschwindigkeit der Rollenbahn (8) ist.

9. Kommissionierlager nach einem der Ansprüche 1 bis 8, **dadurch gekennzeichnet, daß** der Antrieb einer Mehrzahl der Horizontalförderer (30) über eine gemeinsame Antriebswelle (35) erfolgt, die sich quer zu den Lagergassen (7) erstreckt.

10. Kommissionierlager nach Anspruch 9, **gekennzeichnet durch** eine gesteuert schaltbare Kupplung (44) zum zeitlich begrenzten Ableiten einer den Förderweg freigebenden Entsperrbewegung des Rückhalteelements (31) aus der Drehbewegung der gemeinsamen Antriebswelle (35), wobei die Kupplung (44) jeder Entnahmevorrichtung (4) getrennt von den übrigen Kupplungen (44) ansteuerbar ist.

11. Kommissionierlager nach Anspruch 10, **dadurch gekennzeichnet, daß** die Kupplung (44) eine die gemeinsame Antriebswelle (35) ringförmig umschließende Magnetkupplung ist, deren Abtriebsteil ein Nocken (40) ist, der bei Ansteuerung der Magnetkupplung gegen das Rückhalteelement (31) schwenkt.

12. Kommissionierlager nach einem der Ansprüche 1 bis 11, **dadurch gekennzeichnet, daß** sich der Horizontalförderer (30) aus einer ersten, drehfest und koaxial mit der Antriebswelle (35) verbundenen Riemenscheibe (32), mindestens einer weiteren, mitlaufenden Riemenscheibe (33) sowie einem über die Riemenscheiben (32, 33) geführten, endlosen Riemen (34) zusammensetzt, wobei die angetriebene Riemenscheibe (32) das vordere Ende und die mitlaufende Riemenscheibe (33) das hintere Ende des Horizontalförderers (30) definiert.

13. Kommissionierlager nach einem der vorangehenden Ansprüche, **gekennzeichnet durch** eine in dem Bestückungsbereich (2) sich quer zu den Lagergassen (7) erstreckende, aus einzelnen Transportwalzen (6a) zusammengesetzte Transportbahn (6) für neu einzulagernde Waren, wobei zwischen den Transportwalzen (6a) für jede Lagergasse (7) getrennt betätigbare Querförderer (11) mit Förderrichtung (12) in Richtung zu der jeweiligen Lagergasse (7) angeordnet sind.

14. Kommissionierlager nach Anspruch 13, **dadurch gekennzeichnet, daß** sich der Querförderer (11) aus Riemenscheiben (47, 48) zusammensetzt, über die ein endloser Antriebsriemen (46) geführt ist, auf dessen Außenseite Mitnehmerelemente (50) befestigt sind, die, wenn sie sich auf dem Obertrum (49) des Antriebsriemens (46) befinden, bis über die Förderfläche (51) der Transportwalzen (6a) ragen.

15. Kommissionierlager nach Anspruch 14, **dadurch gekennzeichnet, daß** der Abstand der Mitnehmerelemente (50) auf dem Antriebsriemen (46) größer ist als die Länge des Obertrums (49).

16. Kommissionierlager nach einem der Ansprüche 13 bis 15, **dadurch gekennzeichnet, daß** der Antrieb einer Mehrzahl der Querförderer (11) über eine gemeinsame Hauptantriebswelle (54) erfolgt, und daß jeder Querförderer (11) über eine eigene Kupplung (53) zum Ableiten seiner Bewegung aus der Drehbewegung der Hauptantriebswelle (54) verfügt, wobei die Kupplung (53) jedes Querförderers (11) getrennt von den übrigen Kupplungen (53) ansteuerbar ist.

17. Kommissionierlager nach Anspruch 16, **dadurch gekennzeichnet, daß** auch die Bewegung des gemeinsamen Antriebsmittels der Rollenbahn (8) aus der Drehbewegung der Hauptantriebswelle (54) abgeleitet wird, vorzugsweise über ein Umkehrgetriebe (56) und eine für jede Rollenbahn individuell ansteuerbare Kupplung (57).

## Claims

1. Order-picking store for piece goods, comprising
- a storage region (1) with a multiplicity of storage aisles (7) which extend parallel to one another in said storage region, comprise roller conveyors (8) and are intended for the goods which are to be order-picked, goods of the same type being located one behind the other in each aisle (7), and each storage aisle (7) being provided with a dedicated removal apparatus (4) which can be activated independently of the rest of the removal apparatuses,
- a charging region (2) at one end of the storage aisles (7), with means for introducing new goods into the storage aisles (7) provided for this purpose, and
- an order-picking region (3) at the other end of the storage aisles (7), with removal apparatuses (4) for transferring individual goods, in a computer-controlled manner, from the storage aisles (7) onto downstream conveying arrangements,
**characterized in that** the rollers of the roller conveyor (8) can be made to rotate via a common drive means, **in that** constituent parts of each removal apparatus (4) are a restraining element (31) which projects into the conveying path of the roller conveyor (8) in its blocking position, can be lowered by activation and on which accumulate the goods arranged one behind the other in the storage aisle (7), and a horizontal conveyor (30), which is arranged downstream of the restraining element (31), as seen in the conveying direction, **in that** the restraining element (31) is provided with restoring means which act on the restraining element (31), with a restoring force, in the direction of its blocking movement, the restoring force being smaller than the weight-induced force of the goods/goods containers (39, 39a) stored in the storage aisle (7), and **in that** the conveying speed of the horizontal conveyor (30) is greater than the conveying speed of the driven roller conveyor (8).

2. Order-picking store according to Claim 1, **characterized in that** the common drive means is an endless drive belt (16), **in that** the drive belt (16) has a first and a second group of longitudinal sections, the longitudinal sections of the two groups alternating in each case, and **in that** the longitudinal sections of the first group subject the rollers (15) to a frictionally and/or form-fitting drive moment, and the longitudinal sections of the second group subject the rollers (15) to a comparatively smaller drive moment, if any at all.

3. Order-picking store according to Claim 2, **characterized in that** the drive belt (16) is made up of a continuous basic body (20), which is of constant thickness over the entire length, and of drive sections (21), which are fastened, in certain areas, on the basic body (20) and form the longitudinal sections of the first group.

4. Order-picking store according to Claim 3, **characterized in that** the drive sections, (21) are toothed on their outside, and **in that** the resulting toothing arrangement meshes with a corresponding mating toothing arrangement (22) on the circumference of the rollers (15) of the roller conveyor (8).

5. Order-picking store according to one of Claims 2 to 4, **characterized in that** the drive belt (16), serving as drive means, is deflected over deflecting rollers (18, 17) which are located in or beneath the charging region (2) and/or the order-picking region (3).

6. Order-picking store according to one of Claims 2 to 5, **characterized in that** the drive belt (16) is guided through between the rollers (15) and a pressure-exerting abutment (23), and **in that** the pressure-exerting abutment (23) is an elongate profile (24) which is connected to a roller-conveyor profile (25), on which the individual rollers (15) are mounted.

7. Order-picking store according to one of the preceding claims, **characterized in that** extending along the removal apparatuses (4), and transversely to the storage aisles (7), is a preferably continuously driven transporting path (5) for the goods removed with the aid of the removal apparatuses (4).

8. Order-picking store according to one of Claims 1 to 7, **characterized in that** the conveying speed of the horizontal conveyor (30) is at least 25% greater than the conveying speed of the roller conveyor (8).

9. Order-picking store according to one of Claims 1 to 8, **characterized in that** a plurality of the horizontal conveyors (30) are driven via a common drive shaft (35), which extends transversely to the storage aisles (7).

10. Order-picking store according to Claim 9, **characterized by** a coupling (44) which can be switched in a controlled manner and by means of which an unblocking movement of the restraining element (31), said movement releasing the conveying path, is derived for a limited period of time from the rotary movement of the common drive shaft (35), it being possible for the coupling (44) of each removal apparatus (4) to be activated separately from the rest of the couplings (44).

11. Order-picking store according to Claim 10, **characterized in that** the coupling (44) is a magnetic coupling which encloses the common drive shaft (35) in an annular manner, and of which the output part is a cam (40) which pivots against the restraining element (31) when the magnetic coupling is activated.

12. Order-picking store according to one of Claims 1 to 11, **characterized in that** the horizontal conveyor (30) is made up of a first belt pulley (32), which is connected in a rotationally fixed manner to, and coaxially with, the drive shaft (35), of at least one further, co-running belt pulley (33) and of an endless belt (34), which is guided over the belt pulleys (32, 33), the driven belt pulley (32) defining the front end, and the co-running belt pulley (33) defining the rear end, of the horizontal conveyor (30).

13. Order-picking store according to one of the preceding claims, **characterized by** a transporting path (6) which extends in the charging region (2), transversely to the storage aisles (7), is made up of individual transporting rollers (6a) and is intended for goods which are to be newly introduced, transverse conveyors (11) which can be activated separately for each storage aisle (7), and have the conveying direction (12) running in the direction of the respective storage aisle (7), being arranged between the transporting rollers (6a).

14. Order-picking store according to Claim 13, **characterized in that** the transverse conveyor (11) is made up of belt pulleys (47, 48) over which is guided an endless drive belt (46), on the outside of which are fastened carry-along elements (50) which, when located on the top strand (49) of the drive belt (46), project beyond the conveying surface (51) of the transporting rollers (6a).

15. Order-picking store according to Claim 14, **characterized in that** the spacing between the carry-along elements (50) on the drive belt (46) is greater than the length of the top strand (49).

16. Order-picking store according to one of Claims 13 to 15, **characterized in that** a plurality of the transverse conveyors (11) are driven via a common main drive shaft (54), and **in that** each transverse conveyor (11) has a dedicated coupling (53) for deriving its movement from the rotary movement of the main drive shaft (54), it being possible for the coupling (53) of each transverse conveyor (11) to be activated separately from the rest of the couplings (53).

17. Order-picking store according to Claim 16, **characterized in that** the movement of the common drive means of the roller conveyor (8) is also derived from the rotary movement of the main drive shaft (54), preferably via a reversing gear mechanism (56) and a coupling (57), which can be activated individually for each roller conveyor.

## Revendications

1. Dispositif pour rassembler et préparer des marchandises de détail, comprenant :
- une zone de stockage (1) avec une pluralité d'allées de stockage (7) se composant de transporteurs à rouleaux (8) s'étendant dans lesdites allées parallèlement les uns aux autres, des marchandises du même type se trouvant disposées les unes derrière les autres dans chaque allée (7) et chaque allée de stockage (7) est équipée d'un dispositif de retrait (4) propre pouvant être actionné, indépendamment du reste des dispositifs de retrait,
- une zone d'équipement (2) à une extrémité des allées de stockage (7) avec des moyens pour stocker de nouvelles marchandises dans les allées de stockage (7) prévues à cet effet et
- une zone pour rassembler et préparer des marchandises (3) à l'autre extrémité des allées de stockage (7) avec des dispositifs de retrait (4) pour le transfert commandé par ordinateur des marchandises individuelles des allées de stockage (7) sur les dispositifs de transport réordonnés,
**caractérisé en ce que**,
les rouleaux ou les cylindres des transporteurs à rouleaux (8) sont déplaçables par l'intermédiaire d'un moyen d'entraînement commun en rotation, les composants de chaque dispositif de retrait (4) sont un élément de retenue (31) faisant saillie dans sa position de blocage dans le parcours du transporteur à rouleaux (8), pouvant être abaissé par actionnement, sur lequel des marchandises disposées dans l'allée de stockage (7) les unes derrière les autres s'amassent, ainsi qu'un transporteur horizontal (30) disposé derrière l'élément de retenue (31), l'élément de retenue (31) est équipé de moyens de rappel qui sollicitent l'élément de retenue (31) avec une force de rappel dans le sens de son mouvement de blocage, la force de rappel étant inférieure au poids des marchandises/des emballages de marchandises (39, 39a) entreposés dans l'allée de stockage (7) et la vitesse de transport du transporteur horizontal (30) est supérieure à la vitesse de transport du transporteur à rouleaux (8) entraîné.

2. Dispositif pour rassembler et préparer des marchandises selon la revendication 1, **caractérisé en ce que** le moyen d'entraînement commun est une courroie d'entraînement sans fin (16), la courroie d'entraînement (16) comporte un premier et un second groupe de sections longitudinales, les sections longitudinales des deux groupes alternant respectivement, et les sections longitudinales du premier groupe exerçant sur les rouleaux ou les cylindres (15) un couple d'entraînement entraîné par friction et/ou mécaniquement, et les sections longitudinales du second groupe exerçant comparativement un couple d'entraînement réduit ou aucun couple d'entraînement sur les rouleaux ou les cylindres (15).

3. Dispositif pour rassembler et préparer des marchandises selon la revendication 2, **caractérisé en ce que** la courroie d'entraînement (16) se compose d'un corps de base (20) d'épaisseur identique sur toute la longueur ainsi que de sections d'entraînement fixées par section sur le corps de base (20) qui forment les sections longitudinales du premier groupe.

4. Dispositif pour rassembler et préparer des marchandises selon la revendication 3, **caractérisé en ce que** les sections d'entraînement (21) sont dentées sur leur côté externe, et **en ce que** la denture ainsi formée engrène avec une denture antagoniste correspondante (22) sur la circonférence des rouleaux ou des cylindres (15) du transporteur à rouleaux (8).

5. Dispositif pour rassembler et préparer des marchandises selon l'une des revendications 2 à 4, **caractérisé en ce que** le renvoi de la courroie d'entraînement (16) servant de moyen d'entraînement a lieu par l'intermédiaire des rouleaux de renvoi (18, 17), qui se trouvent dans ou sous la zone d'équipement (2) et/ou la zone pour rassembler et préparer des marchandises (3).

6. Dispositif pour rassembler et préparer des marchandises selon l'une des revendications 2 à 5, **caractérisé en ce que** la courroie d'entraînement (16) est guidée entre les rouleaux ou les cylindres (15) et une butée (23), et la butée (23) est un profil étendu longitudinalement (24), lequel est relié à un profil du transporteur à rouleaux (25) sur lequel les rouleaux individuels ou les cylindres (15) sont montés.

7. Dispositif pour rassembler et préparer des marchandises selon l'une des revendications précédentes, **caractérisé en ce qu'**une voie de transport (5) pour les marchandises retirées à l'aide des dispositifs de retrait (4), entraînée de préférence de manière continue, s'étend le long des dispositifs de retrait (4) et transversalement par rapport aux allées de stockage (7).

8. Dispositif pour rassembler et préparer des marchandises selon l'une des revendications 1 à 7, **caractérisé en ce que** la vitesse de transport du transporteur horizontal (30) est au moins de 25 % supérieure à la vitesse de transport du transporteur à rouleaux (8).

9. Dispositif pour rassembler et préparer des marchandises selon l'une des revendications 1 à 8, **caractérisé en ce que** l'entraînement d'une pluralité de transporteurs horizontaux (30) a lieu par l'intermédiaire d'un arbre d'entraînement commun (35) qui s'étend transversalement par rapport aux allées de stockage (7).

10. Dispositif pour rassembler et préparer des marchandises selon la revendication 9, **caractérisé par** un dispositif d'accouplement embrayable (44) commandé pour une déviation limitée dans le temps d'un mouvement de déblocage de l'élément de retenue (31) libérant le chemin de transport du mouvement de rotation de l'arbre d'entraînement commun (35, moyennant quoi, le dispositif d'accouplement (44) séparé des dispositifs d'accouplement restants (44) peut être actionné.

11. Dispositif pour rassembler et préparer des marchandises selon la revendication 10, **caractérisé en ce que** le dispositif d'accouplement (44) est un accouplement à aimant entourant l'arbre d'entraînement commun (35) de manière annulaire, l'élément d'entraînement du dispositif d'accouplement à aimant étant une came (40) qui pivote lors de l'actionnement du dispositif d'accouplement à aimant contre l'élément de retenue (31).

12. Dispositif pour rassembler et préparer des marchandises selon l'une quelconque des revendications 1 à 11, **caractérisé en ce que** le transporteur horizontal (30) se compose d'une première poulie pour courroie (32) reliée à l'arbre d'entraînement (35) de manière à résister à la torsion et de manière coaxiale, d'au moins une autre poulie pour courroie (33) fonctionnant en même temps ainsi que d'une courroie sans fin (34) guidée par l'intermédiaire de poulies pour courroie (32, 33), la courroie entraînée (32) définissant l'extrémité avant et la poulie pour courroie fonctionnant en même temps (33) l'extrémité arrière du transporteur horizontal (30).

13. Dispositif pour rassembler et préparer des marchandises selon l'une quelconque des revendications précédentes, **caractérisé par** une voie de transport pour de nouvelles marchandises à stocker composée de cylindres de transport individuels (6a) s'étendant transversalement par rapport aux allées de stockage (7) dans la zone d'équipement, moyennant quoi, entre les cylindres de transport (6a) de chaque allée de stockage (7) des transporteurs transversaux (11) actionnables séparément par le dispositif de transport (12) sont disposés en direction de chaque allée de stockage (7).

14. Dispositif pour rassembler et préparer des marchandises selon la revendication 13, **caractérisé en ce que** le transporteur transversal (11) se compose de poulies pour courroie (47, 48) par l'intermédiaire desquelles une courroie d'entraînement sans fin (46) est guidée, sur la face externe de laquelle des éléments d'entraînement (50) sont fixés qui, lorsqu'ils se trouvent sur le brin supérieur (49) de la courroie d'entraînement (46), font saillie jusqu'au-dessus de la surface de transport (51) des cylindres de transport (6a).

15. Dispositif pour rassembler et préparer des marchandises selon la revendication 14, **caractérisé en ce que** la distance des éléments d'entraînement (50) sur la courroie d'entraînement (46) est supérieure à la longueur du brin supérieur (49).

16. Dispositif pour rassembler et préparer des marchandises selon l'une des revendications 13 à 15, **caractérisé en ce que** l'entraînement d'une pluralité de transporteurs transversaux (11) a lieu par l'intermédiaire d'un arbre d'entraînement principal commun (54), et chaque transporteur transversal (11) dispose d'un dispositif d'accouplement propre (53) pour la déviation de son mouvement du mouvement de rotation de l'arbre d'entraînement principal (54), le dispositif d'entraînement (53) de chaque transporteur transversal (11) pouvant être actionné indépendamment des dispositifs d'accouplement restants (53).

17. Dispositif pour rassembler et préparer des marchandises selon la revendication 16, **caractérisé en ce que** même le mouvement du moyen d'entraînement commun du transporteur à rouleaux (8) est dévié du mouvement de rotation de l'arbre d'entraînement principal (54), de préférence, par l'intermédiaire d'un accouplement à renversement de marche (56) et d'un accouplement (57) pour chaque transporteur à rouleaux pouvant être actionné individuellement.
